# EUROPÄISCHE PATENTANMELDUNG

(11) **EP 4 011 547 A1**
(43) Veröffentlichungstag der Anmeldung: **15.06.2022**
(21) Anmeldenummer: 20213286.6
(22) Anmeldetag: 11.12.2020
(51) Int. Cl.: B23Q 17/09, B23Q 15/12

(54) **VERFAHREN ZUR ÜBERWACHUNG EINER TEMPERATUR IN EINEM ARBEITSBEREICH EINER WERKZEUGMASCHINE UND WERKZEUGMASCHINE**

(71) Anmelder: Hilti Aktiengesellschaft, 9494 Schaan (LI)
(72) Erfinder: Rieger, Hans-Joerg, 6712 Thueringen (AT)
(74) Vertreter: Hilti Aktiengesellschaft Corporate Intellectual Property

(57) **Zusammenfassung**

Verfahren zur Überwachung einer Temperatur in einem Arbeitsbereich (3) einer Werkzeugmaschine (1)
**gekennzeichnet durch die folgenden Verfahrensschritte:**

a) Bereitstellung einer Werkzeugmaschine (1) mit einem Werkzeug (2),

b) Betrieb der Werkzeugmaschine (1),

c) Erfassung von Daten, die die Temperatur im Arbeitsbereich (3) einer Werkzeugmaschine (1) wiedergeben, mit mindestens einem Sensor (5), der an der Werkzeugmaschine (1) vorgesehen ist,

d1) Anzeige der Temperaturdaten und/oder

d2) Verwendung der Temperaturdaten zur Steuerung von Betriebsparametern, die den Betrieb der Werkzeugmaschine (1) beeinflussen.

## Beschreibung

Die vorliegende Erfindung betrifft ein Verfahren zur Überwachung einer Temperatur in einem Arbeitsbereich einer Werkzeugmaschine. Es ist vorgesehen, dass Temperaturdaten aus dem Arbeitsbereich der Werkzeugmaschine mit einem Sensor ermittelt werden, wobei die Temperaturdaten zur Steuerung von Betriebsparametern verwendet werden, die den Betrieb der Werkzeugmaschine beeinflussen. In einem zweiten Aspekt betrifft der Erfindung eine Werkzeugmaschine mit Werkzeug, wobei die Werkzeugmaschine mindestens einen Sensor zur Erfassung von Daten umfasst, wobei die Daten eine Temperatur in einem Arbeitsbereich einer Werkzeugmaschine wiedergeben.

### Hintergrund der Erfindung:

Im Stand der Technik sind eine Vielzahl von verschiedenen Werkzeugmaschinen bekannt, mit denen Untergründe, Wände, Mauern oder Werkstücke bearbeitet werden können. Bekannte Werkzeugmaschinen sind beispielsweise Sägen, Schleif- oder Trenngeräte, Winkelschleifer, Kernbohrgeräte oder dergleichen. Die konkrete Bearbeitung erfolgt zumeist mit einem Werkzeug, das Bestandteil der Werkzeugmaschine ist. Dabei kann es sich beispielsweise um Sägeblätter, Trenn- oder Schleifscheiben oder Bohrkronen handeln. Bei besonders harten Untergründen können die Werkzeuge mit Diamanten besetzt sein, um eine bessere Schleif- oder Schneidewirkung zu erzielen.

Bei der Bearbeitung von Werkstoffen oder Untergründen entstehen reibungsbedingt häufig sehr hohe Temperaturen. Diese hohen Temperaturen sind unerwünscht, weil sie zu Beeinträchtigungen oder Zerstörungen des Werkzeugs oder zu Beschädigungen an den zu bearbeitenden Untergründen oder Werkstücken führen können. Dies ist insbesondere der Fall bei einer Zerspanung mit geometrisch unbestimmten Scheiden, wie beispielsweise beim Schleifen oder Trennen mit Diamantwerkzeugen. Beim Einsatz solcher Werkzeugmaschinen ist daher darauf zu achten, dass Beeinträchtigungen am Werkzeug bzw. an den zu bearbeitenden Untergründen oder Werkstücken vermieden werden.

Im Stand der Technik ist es dazu bekannt, das Werkzeug einer Werkzeugmaschine mit Wasser oder anderen Kühlmedien zu kühlen. Es hat sich aber gezeigt, dass eine solche Fluidkühlung sehr aufwändig in der Handhabung und Konstruktion der Werkzeugmaschine ist und dass solche flüssigkeitsbasierten Kühlungen zu unerwünschten Verschmutzungen der Baustelle führen können, die später entfernt werden müssen.

Die Aufgabe, die der vorliegenden Erfindung zugrunde liegt, besteht daher darin, die vorstehend beschriebenen Mängel und Nachteile des Standes der Technik zu überwinden und eine Werkzeugmaschine bereitzustellen, die stets im optimalen Temperaturbereich arbeitet, ohne dass die Werkzeugmaschine mit einer aufwändigen Wasserkühlung ausgestattet sein muss.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zur Überwachung einer Temperatur in einem Arbeitsbereich einer Werkzeugmaschine vorgesehen. Das Verfahren ist durch folgende Verfahrensschritte gekennzeichnet:
a) Bereitstellung einer Werkzeugmaschine mit einem Werkzeug,
b) Betrieb der Werkzeugmaschine,
c) Erfassung von Daten, die die Temperatur im Arbeitsbereich einer Werkzeugmaschine wiedergeben, mit mindestens einem Sensor, der an der Werkzeugmaschine vorgesehen ist,
d1) Anzeige der Temperaturdaten und/oder
d2) Verwendung der Temperaturdaten zur Steuerung von Betriebsparametern, die den Betrieb der Werkzeugmaschine beeinflussen.

Eine wesentliche Grundidee der Erfindung besteht darin, mindestens einen Sensor vorzusehen, der dazu eingerichtet ist, Temperaturdaten in einem Arbeitsbereich der Werkzeugmaschine zu erfassen. Dabei kann es sich um einen handelsüblichen Temperatursensor handeln.

Es ist im Sinne der Erfindung bevorzugt, dass das vorgeschlagene Verfahren auch als Verfahren zur Temperaturüberwachung bezeichnet wird. Es war für die Fachwelt überraschend, dass mit der Erfindung eine Möglichkeit bereitgestellt werden kann, die sicherstellt, dass eine Werkzeugmaschine stets im optimalen Temperaturbereich arbeitet, ohne dass die Werkzeugmaschine mit einer aufwändigen Wasserkühlung ausgestattet sein muss.

Es können auch zwei oder mehr Sensoren zur Erfassung der Temperaturdaten verwendet werden. Es ist im Sinne der Erfindung bevorzugt, dass die Temperatursensoren dazu verwendet werden, dass beim Betrieb der Werkzeugmaschine stets optimale Temperaturen eingehalten werden, d.h. mit anderen Worten, dass in einem optimalen Temperaturbereich gearbeitet wird. Der Begriff «optimaler Temperaturbereich» bedeutet im Sinne der Erfindung bevorzugt, dass die Temperatur einerseits so hoch sein dürfen, dass die Werkzeugmaschine mit einer ausreichend hohen Leistung und Arbeitskraft arbeiten kann, um die anstehenden Schneid-, Schleif-, Trenn- und/oder Bohrarbeiten durchführen zu können. Auf der anderen Seite sollen die Temperaturen im Arbeitsbereich der Werkzeugmaschine eine Obergrenze für die Temperatur nicht überschreiten, wobei diese Obergrenze diejenige Temperatur darstellt, oberhalb der mit Beschädigungen am Werkzeug und/oder am zu bearbeitenden Untergrund und/oder Werkstück zu rechnen ist. Durch die erste genannte Temperatur wird eine Untergrenze des optimalen Temperaturbereichs definiert, während die zweite genannte Temperatur den optimalen Temperaturbereich nach oben begrenzt.

Es ist im Sinne der Erfindung bevorzugt, dass der optimale Temperaturbereich von verschiedenen Parametern abhängen kann. Mit anderen Worten ist der optimale Temperaturbereich kein fixer, festgelegter Temperaturbereich, der für alle Arbeiten und Werkzeug- und Untergrundtypen gleich ist. Es ist im Sinne der Erfindung vielmehr bevorzugt, dass die Unter- und/oder Obergrenzen des optimalen Temperaturbereiches variieren können, beispielsweise in Abhängigkeit von der Beschaffenheit und/oder von dem Material des Werkzeugs bzw. des zu bearbeitenden Untergrunds und/oder von der Art und Intensität der durchzuführenden Arbeit, ohne darauf beschränkt zu sein. Es ist im Sinne der Erfindung bevorzugt, dass für die durchzuführenden Arbeiten, für unterschiedliche Werkzeugtypen und für unterschiedliche Untergrundtypen voneinander abweichende optimale Temperaturbereiche festgelegt werden können. Der optimale Temperaturbereich kann im Sinne der Erfindung auch mit bekannten und/oder hinterlegten Soll-Temperaturdaten korrespondieren. Das bedeutet mit anderen Worten bevorzugt, dass die bekannten und/oder hinterlegten Soll-Temperaturdaten verschiedene, für unterschiedliche Anwendungsfälle und -gebiete optimale Temperaturbereich umfassen können.

In einer Ausgestaltung der Erfindung kann das vorgeschlagene Verfahren den Verfahrensschritt des Vergleiches der erfassten Temperaturdaten mit bekannten und/oder hinterlegten Soll-Temperaturdaten umfassen. Es ist im Sinne der Erfindung bevorzugt, dass die mit dem Sensor erfassten Temperaturdaten mit bekannten und/oder hinterlegten Soll-Temperaturdaten verglichen werden können, um festzustellen, ob der Betrieb der Werkzeugmaschine in einem optimalen Temperaturbereich erfolgt.

Wenn die mit dem Sensor ermittelten Temperaturen innerhalb des optimalen Temperaturbereiches liegen, kann dies beispielsweise auf einer Anzeigevorrichtung, wie einem Bildschirm, einem Display oder einem Monitor, angezeigt werden. Mit anderen Worten ist es im Sinne der Erfindung bevorzugt, dass die Werkzeugmaschine eine Anzeigevorrichtung zur Anzeige der Temperaturdaten umfasst, wobei mit der Anzeigevorrichtung die Temperaturdaten für einen Nutzer der Werkzeugmaschine angezeigt werden können.

Es ist auch möglich, mit einer Farbanzeige anzugeben, ob die ermittelten Temperaturen beispielsweise mittig in einem optimalen Temperaturbereich liegen («grüner Bereich»), im Außenbereich eines optimalen Temperaturbereichs («oranger oder gelber Bereich») oder außerhalb des optimalen Temperaturbereichs («roter Bereich»). Wenn die mit dem Sensor ermittelten Temperaturen außerhalb des optimalen Temperaturbereiches liegen, können die mit dem Sensor ermittelten Temperaturdaten zur Steuerung von Betriebsparametern verwendet werden, wobei diese Betriebsparameter solche Parameter sein können, die den Betrieb der Werkzeugmaschine beeinflussen. Es ist im Sinne der Erfindung besonders bevorzugt, dass die mit dem mindestens einen Sensor ermittelten Temperaturwerte direkten Einfluss auf die Prozessparameter der Werkzeugmaschine nehmen können, beispielsweise indem Werte, wie Vorschubgeschwindigkeit, Drehzahl des Motors der Werkzeugmaschine und/oder des Werkzeugs oder die Antriebsleistung in Abhängigkeit von der ermittelten Temperatur angepasst werden können.

Wenn die ermittelten Temperaturen beispielsweise oberhalb einer Obergrenze des optimalen Temperaturbereiches liegen, ist es im Sinne der Erfindung insbesondere bevorzugt, dass die Betriebsparameter der Werkzeugmaschine dahingehend angepasst bzw. abgeändert werden können, dass die Temperaturen im Arbeitsbereich der Werkzeugmaschine sinken. Diese Anpassung kann beispielweise von einer Auswerte- und Steuerungseinheit vorgenommen werden, die dazu eingerichtet ist, Betriebsparameter zu beeinflussen. Beispielsweise kann die Auswerte- und Steuerungseinheit dazu eingerichtet sein, Werte, wie Vorschubgeschwindigkeit, Drehzahl des Motors der Werkzeugmaschine und/oder des Werkzeugs oder die Antriebsleistung in Abhängigkeit von der ermittelten Temperatur anzupassen bzw. zu verändern, bis die ermittelten Temperaturen im optimalen Temperaturbereich der Werkzeugmaschine liegen. In dieser Ausgestaltung des vorgeschlagenen Verfahrens kann der Verfahrensschritt der Anpassung der Betriebsparameter durch eine Auswerte- und Steuerungseinheit der Werkzeugmaschine, wenn die erfassten Temperaturen nicht in einem bekannten und/oder hinterlegten Soll-Temperaturbereich liegen, zum vorgeschlagenen Temperaturüberwachungsverfahren gehören. Die Anpassung der Betriebsparameter erfolgt insbesondere mit dem Ziel, dass die erfassten Temperaturen nach der Anpassung in dem optimalen Temperaturbereich liegen. Beispielsweise kann die Auswerte- und Steuerungseinheit veranlassen, dass die Vorschubgeschwindigkeit verlangsamt wird oder eine Drehzahl des Motors oder der Bohrkrone der Werkzeugmaschine reduziert wird, um die Temperaturen im Arbeitsbereich der Werkzeugmaschine wieder in den optimalen Temperaturbereich zu lenken. Wenn die erfassten Temperaturen von vornherein innerhalb des optimalen Soll-Temperaturbereichs liegen, ist es bevorzugt, dass die Auswerte- und Steuerungseinheit den Betrieb der Werkzeugmaschine im Wesentlichen unverändert aufrechterhält.

Der Begriff der «Vorschubgeschwindigkeit» beschreibt bevorzugt die Geschwindigkeit einer automatischen Vorschubvorrichtung, wie sie teilweise bei schweren Werkzeugmaschinen, wie Wandsägen oder Kernbohrgeräten, eingesetzt werden. Solche Vorschubvorrichtungen sind beispielsweise als Autofeed- oder Cutassistvorrichtungen bekannt. Alternativ kann mit dem Begriff der «Vorschubgeschwindigkeit» auch die Geschwindigkeit der Werkzeugmaschine gemeint sein, wenn sie mit einer solchen Vorschubvorrichtung angetrieben wird. Wenn eine Werkzeugmaschine mit einer Vorschubvorrichtung betrieben wird, betrifft die Erfindung insbesondere auch ein System aus einer vorgeschlagenen Werkzeugmaschine und einer Vorschubvorrichtung.

Es ist im Sinne der Erfindung bevorzugt, dass die Betriebsparameter ausgewählt sind aus einer Gruppe umfassend Vorschubgeschwindigkeit, Drehzahl eines Motors der Werkzeugmaschine, Drehzahl des Werkzeugs und/oder Antriebsleistung der Werkzeugmaschine. Mit anderen Worten kann es sich bei den Betriebsparametern, die den Betrieb der Werkzeugmaschine beeinflussen können, um die eben genannten Parameter handelt. Es sind auch andere Parameter denkbar, die geeignet sind zur Steuerung einer Werkzeugmaschine oder zur Regelung deren Betriebsparameter.

In einer Ausgestaltung der Erfindung kann das vorgeschlagene Verfahren den Verfahrensschritt der Abgabe eines Warnsignals umfassen, wenn die erfassten Temperaturdaten außerhalb der bekannten und/oder hinterlegten Soll-Temperaturdaten liegen. Dabei kann es sich beispielsweise um ein akustisches und/oder optisches Signal handeln. Mit anderen Worten kann das Warnsignal optisch und/oder akustisch ausgestaltet sein. Beispielsweise kann eine Leuchtdiode (LED) als Warnsignal blinken oder ein Piepton als akustisches Warnsignal erklingen.

Es ist im Sinne der Erfindung bevorzugt, dass die bekannten und/oder hinterlegten Soll-Temperaturdaten in einem Speichermedium und/oder in einem Code der Werkzeugmaschine hinterlegt sind. Bei dem Speichermedium kann es sich beispielsweise um einen Prozessor oder Mikro-Prozessor handeln, der Bestandteil der Werkzeugmaschine ist. Mit dem Begriff «Code» ist gemeint, dass die bekannten und/oder hinterlegten Soll-Temperaturdaten in einem Auswerteverfahren, beispielweise als Vergleichsdaten, hinterlegt sind und verwendet werden, um zu prüfen, ob die Werkzeugmaschine in einem für sie optimalen Temperaturbereich arbeitet. Es ist im Sinne der Erfindung insbesondere bevorzugt, dass die für die Werkzeugmaschine empfohlenen Soll-Betriebstemperaturen auf einem Speichermedium oder in einem Code auf der Werkzeugmaschine hinterlegt sind. Sie können vorteilhafterweise vor und/oder während der Inbetriebnahme der Werkzeugmaschine ausgelesen und informationstechnologisch weiterverarbeitet werden.

Es kann im Sinne der Erfindung auch bevorzugt sein, dass die bekannten und/oder hinterlegten Soll-Temperaturdaten in einem externen Speicher hinterlegt sind. In dieser Ausgestaltung der Erfindung ist es denkbar, dass sich die Werkzeugmaschine identifiziert und die entsprechenden Daten und Informationen, wie die hinterlegten Temperaturdaten, von einem externen Speicher abruft.

In einem zweiten Aspekt betrifft die Erfindung eine Werkzeugmaschine mit einem Werkzeug, wobei die Werkzeugmaschine mindestens einen Sensor zur Erfassung von Daten, die eine Temperatur in einem Arbeitsbereich einer Werkzeugmaschine wiedergeben, umfasst. Die für das Verfahren zur Temperaturüberwachung eingeführten Begriffe, Definitionen und technischen Vorteile gelten vorzugsweise für die Werkzeugmaschine analog. Mit der vorgeschlagenen Werkzeugmaschine kann insbesondere eine technische Lösung bereitgestellt werden, die sicherstellt, dass eine Werkzeugmaschine stets im optimalen Temperaturbereich arbeitet, ohne dass die Werkzeugmaschine mit einer aufwändigen Wasserkühlung ausgestattet sein muss.

Es ist im Sinne der Erfindung bevorzugt, dass der Arbeitsbereich der Werkzeugmaschine von einem Kontaktbereich zwischen dem Werkzeug der Werkzeugmaschine und einem zu bearbeitenden Untergrund oder Werkstück gebildet wird. Es ist im Sinne der Erfindung bevorzugt, dass die Werkzeugmaschine mit ihrem Werkzeug einen Untergrund oder ein Werkstück bearbeitet. Dazu dringt das Werkzeug in den Untergrund oder das Werkstück ein (zum Beispiel im Falle einer Säge oder eines Kernbohrgeräts) oder bearbeitet es an einer Oberfläche (beispielsweise im Falle einer Schleifmaschine). Auf jeden Fall besteht ein Kontakt zwischen dem Werkzeug der Werkzeugmaschine und dem zu bearbeitenden Untergrund oder Werkstück. Der Raumbereich um diesen physischen Kontakt zwischen Werkzeug auf der einen Seite und Untergrund oder Werkstück auf der anderen Seite wird im Sinne der Erfindung bevorzugt als Arbeits- oder Kontaktbereich bezeichnet. Es ist erfindungsgemäß vorgesehen, dass der Sensor der vorgeschlagenen Werkzeugmaschine die Temperaturen in diesem Arbeits- oder Kontaktbereich ermittelt. Dazu kann der Sensor selbst in diesem Arbeits- und Kontaktbereich angeordnet vorliegen. Es kann aber auch bevorzugt sein, dass lediglich ein Fühler in dem Arbeits- und Kontaktbereich der Werkzeugmaschine vorliegt und die tatsächliche Ermittlung der Temperatur in diesem Bereich an einem anderen Ort erfolgt. Der Sensor der Werkzeugmaschine kann vorzugsweise an der Werkzeugmaschine oder in dem Arbeits- und Kontaktbereich der Werkzeugmaschine angeordnet sein. Dadurch wird eine unmittelbare Erfassung der Temperatur- oder Temperaturdaten ermöglicht.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

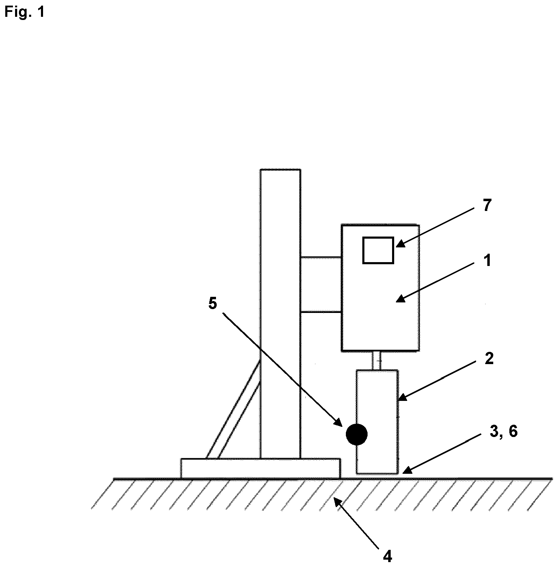

- Fig. 1: Ansicht einer bevorzugten Ausgestaltung der Werkzeugmaschine

### Ausführungsbeispiel und Figurenbeschreibung:

Figur 1 zeigt eine vorgeschlagene Werkzeugmaschine 1. Die Werkzeugmaschine 1 umfasst ein Werkzeug 2. Die Werkzeugmaschine 1 ist dazu eingerichtet, mit dem Werkzeug 2 einen Untergrund 4 oder ein Werkstück 4 zu bearbeiten. In dem in Fig. 1 dargestellten Ausführungsbeispiel der Erfindung ist ein Kernbohrgerät als Werkzeugmaschine 1 abgebildet. Das Kernbohrgerät 1 ist ständergeführt ausgeführt, d.h. es ist während seines Betriebs mit einem Bohrständer (links in der Figur) verbunden. Als Werkzeug 2 des Kernbohrgeräts 1 ist in Fig. 1 eine Bohrkrone 2 abgebildet, die dazu eingerichtet ist, zylinderförmige Bohrkerne aus einem Untergrund 4 herauszuschneiden. Während des Betriebs der Werkzeugmaschine 1 kommt es zu einem Kontakt 6 zwischen dem Werkzeug 2 der Werkzeugmaschine 1 auf der einen Seite und dem Untergrund 4 oder dem Werkstück 4 auf der anderen Seite. Der Raumbereich um diesen physischen Kontakt 6 herum wird vorzugsweise als Kontaktbereich 6 bezeichnet, der wiederum einen Arbeitsbereich 3 der Werkzeugmaschine 1 bildet. Der Arbeitsbereich 3 der Werkzeugmaschine 1 wird vorzugsweise von einem Kontaktbereich 6 zwischen dem Werkzeug 2 der Werkzeugmaschine 1 und einem zu bearbeitenden Untergrund 4 oder Werkstück 4 gebildet. Es ist im Sinne der Erfindung bevorzugt, dass in diesem Arbeitsbereich 3 Temperaturen gemessen, d.h. Temperaturdaten erhoben werden können. Die Erfassung dieser Temperaturdaten erfolgt mit mindestens einem Sensor 5, der an der Werkzeugmaschine 1 oder in ihrem Arbeitsbereich 3 vorgesehen ist. Der Sensor 5 ist vorzugsweise dazu eingerichtet, die bei einer Bearbeitung eines Untergrunds 4 oder eines Werkstücks 4 auftretenden Temperaturen zu erfassen. Darüber hinaus kann es bevorzugt sein, dass der Sensor 5 dazu eingerichtet ist, die ermittelten Temperaturdaten an eine Steuer- und Auswerteeinheit (nicht dargestellt) weiterzuleiten, in der die Daten informationstechnologisch weiterverarbeitet werden können. Vorzugsweise erfolgt in einer solchen Auswerteeinheit ein Vergleich zwischen den ermittelten Temperaturdaten mit hinterlegten und/oder bekannten Soll-Temperaturen. Insbesondere kann durch einen solchen Vergleich festgestellt werden, ob die Werkzeugmaschine 1 in einem für sie optimalen Temperaturbereich betrieben wird. Wenn der Vergleich ergibt, dass dies nicht der Fall ist, d.h. die Werkzeugmaschine 1 nicht in einem für sie optimalen Temperaturbereich arbeitet, kann es im Sinne der Erfindung bevorzugt sein, dass die Steuer- und Auswerteeinheit dazu eingerichtet ist, zu veranlassen, dass Betriebsparameter der Werkzeugmaschine 1 an diesem Umstand angepasst werden oder ggf. daraufhin wirken, dass die Werkzeugmaschine 1 in den optimalen Temperaturbereich gelangt. Die Position des Sensors 5, die in Fig. 1 angegeben ist, ist als Beispiel zu verstehen. Der Sensor 5 kann selbstverständlich an unterschiedlichen Stellen der Werkzeugmaschine 1 angebracht werden.

Es ist im Sinne der Erfindung bevorzugt, dass die ermittelten Temperaturdaten mit bekannten und/oder hinterlegten Soll-Temperaturdaten verglichen werden können. Diese bekannten Temperaturdaten können beispielsweise in einem Speichermedium (nicht dargestellt), der Steuer- und Auswerteeinheit, einem Prozessor und/oder Mikro-Prozessor hinterlegt sein. Femer ist es möglich, dass sie in einem externen Speicher (nicht dargestellt) abgespeichert vorliegen.

Die Werkzeugmaschine 1 kann ferner eine Anzeigevorrichtung 7 umfassen, mit der die mit dem Sensor 5 ermittelten Temperaturdaten angezeigt werden können.

### Bezugszeichenliste

- 1: Werkzeugmaschine
- 2: Werkzeug
- 3: Arbeitsbereich
- 4: Untergrund oder Werkstück
- 5: Sensor
- 6: Kontaktbereich
- 7: Anzeigevorrichtung

## Patentansprüche

1. Verfahren zur Überwachung einer Temperatur in einem Arbeitsbereich (3) einer Werkzeugmaschine (1)
**gekennzeichnet durch die folgenden Verfahrensschritte:**
a) Bereitstellung einer Werkzeugmaschine (1) mit einem Werkzeug (2),
b) Betrieb der Werkzeugmaschine (1),
c) Erfassung von Daten, die die Temperatur im Arbeitsbereich (3) einer Werkzeugmaschine (1) wiedergeben, mit mindestens einem Sensor (5), der an der Werkzeugmaschine (1) vorgesehen ist,
d1) Anzeige der Temperaturdaten und/oder
d2) Verwendung der Temperaturdaten zur Steuerung von Betriebsparametern, die den Betrieb der Werkzeugmaschine (1) beeinflussen.

2. Verfahren nach Anspruch 1,
wobei das Verfahren als **weiteren Verfahrensschritt umfasst:**
- Vergleich der Temperaturdaten mit bekannten und/oder hinterlegten Soll-Temperaturdaten.

3. Verfahren nach Anspruch 2
wobei das Verfahren als **weiteren Verfahrensschritt umfasst:**
- Abgabe eines Warnsignals, wenn die erfassten Temperaturdaten außerhalb der bekannten und/oder hinterlegten Soll-Temperaturdaten liegen.

4. Verfahren nach Anspruch 3
**dadurch gekennzeichnet, dass**
das Warnsignal optisch und/oder akustisch ausgestaltet ist.

5. Verfahren nach einem der vorherigen Ansprüche
**dadurch gekennzeichnet, dass**
die Betriebsparameter ausgewählt sind aus einer Gruppe umfassend Vorschubgeschwindigkeit, Drehzahl eines Motors der Werkzeugmaschine (1), Drehzahl des Werkzeugs (2) und/oder Antriebsleistung der Werkzeugmaschine (1).

6. Verfahren nach einem der vorherigen Ansprüche
**dadurch gekennzeichnet, dass**
die bekannten und/oder hinterlegten Soll-Temperaturdaten in einem Speichermedium und/oder in einem Code der Werkzeugmaschine (1) hinterlegt sind.

7. Verfahren nach einem der Ansprüche 1 bis 5
**dadurch gekennzeichnet, dass**
die bekannten und/oder hinterlegten Soll-Temperaturdaten in einem externen Speicher hinterlegt sind.

8. Werkzeugmaschine (1) mit einem Werkzeug
**dadurch gekennzeichnet, dass**
die Werkzeugmaschine (1) mindestens einen Sensor (5) zur Erfassung von Daten, die eine Temperatur in einem Arbeitsbereich (3) einer Werkzeugmaschine (1) wiedergeben, umfasst.

9. Werkzeugmaschine (1) nach Anspruch 8
**dadurch gekennzeichnet, dass**
der Arbeitsbereich (3) der Werkzeugmaschine (1) von einem Kontaktbereich (6) zwischen dem Werkzeug (2) der Werkzeugmaschine (1) und einem zu bearbeitenden Untergrund (4) oder Werkstück (4) gebildet wird.

10. Werkzeugmaschine (1) nach Anspruch 8 oder 9
**dadurch gekennzeichnet, dass**
der Sensor (5) im Arbeitsbereich (3) der Werkzeugmaschine (1) angeordnet vorliegt.

11. Werkzeugmaschine (1) nach einem der Ansprüche 8 bis 10
**dadurch gekennzeichnet, dass**
die Werkzeugmaschine (1) eine Anzeigevorrichtung (7) zur Anzeige der Temperaturdaten umfasst.
